# EUROPÄISCHE PATENTSCHRIFT

(11) **EP 1 945 410 B1**
(45) Veröffentlichungstag und Bekanntmachung des Hinweises auf die Patenterteilung: **16.03.2011**
(21) Anmeldenummer: 06807248.7
(22) Anmeldetag: 13.10.2006
(51) Int. Cl.: B25F 5/00, B23B 49/00

(54) **HANDWERKZEUGMASCHINE**
PORTABLE POWER TOOL
MACHINE-OUTIL

(30) Priorität: 14.10.2005 DE 102005049130
(43) Veröffentlichungstag der Anmeldung: 23.07.2008
(73) Patentinhaber: ROBERT BOSCH GMBH, 70442 Stuttgart (DE)
(72) Erfinder: IRION, Hans, 71364 Winnenden (DE); FLINSPACH, Gunter, 71229 Leonberg (DE); MAHLER, Michael, 70771 Leinfelden-Echterdingen (DE); KRAPF, Reiner, 72770 Reutlingen (DE)
(86) Internationale Anmeldenummer: PCT/EP2006/067384
(87) Internationale Veröffentlichungsnummer: WO 2007/042569

(56) Entgegenhaltungen:
- EP-A- 1 240 964
- EP-A- 1 271 094
- DE-A1- 2 855 217
- DE-A1- 4 336 730
- DE-A1- 10 318 799
- DE-U1-202004 018 003
- JP-A- 2002 205 285
- JP-A- 2004 160 822
- US-A1- 2005 103 510

## Beschreibung

### Stand der Technik

Die Erfindung geht aus von einer Handwerkzeugmaschine nach dem Oberbegriff des Anspruchs 1.

Es sind Bohrmaschinen mit einer Vorrichtung zur Bestimmung einer Eindringtiefe eines Bohrers in ein Werkstück bekannt. Solch eine Vorrichtung ist üblicherweise als Tiefenanschlag mit einer Längenskala ausgebildet. Zum Bestimmen bzw. Begrenzen der Eindringtiefe werden der Bohrer und der Tiefenanschlag am Werkstück zur Anlage gebracht und mit Hilfe der Längenskala wird ein Abstand der Handwerkzeugmaschine zum Werkstück bestimmt. Anschließend wird der Tiefenanschlag um eine gewünschte Eindringtiefe verschoben und das Werkstück wird durch ein Einfahren des Bohrers bis in die gewünschte Eindringtiefe bearbeitet.

Aus der US 2005/103510 ist elektrowerkzeug beispielsweise eine Bohrmaschine, bekannt, die eine Steuervorrichtung besitzt, die es ermöglicht, Eingaben eines Anwenders an die Mäschinensteuerung weiter zu geben, um somit den Betrieb der Maschine, wie beispielsweise die Motordrehzahl an die individuellen, Vorgaben anzupassen. Das Etektrowerkzeug der US 2005/103510 A besitzt dazu unter anderem auch einen Entfemungsmesssensor zur Bestimmung der Bohrtiefe bzw. des Bohrvortriebes.

Aus der JP 2004 160822 ist eine Elektrowerkzeug in Form einer Standsäge bekannt, die eine Werkzeugmaschinenüberwachungsvorrichtung in Form eines oder mehrerer Radarsensoren aufweist. Im Falle eines durch die Übemachungsvorrichturung detektierten Gefährdungspotential für einen Anwender, wird das Sägeblatt der Maschine über eine entsprechende Steuerungsvorrichtung abgebremst oder schlagartig gestoppt.

Aus der EP 1 240 964 A ist ein Handwerkzeuggerät in Form einer Bohrmaschine bekannt, welches einen elektronischen Tiefenanschlag besitzt Über einen Sensor zur berührungslosen Entfernungsmessung kann die Bohrtiefe ermittelt werden oder auch der Bohrvortrieb entsprechend eine vorgegebenen Wert gestoppt werden. Hierzu besitzt die Maschine eine Steuereinheit, die in Abhängigkeit der Entfernungsmesswerte den Antrieb der Maschine regelt.

### Vorteile der Erfindung

Die Erfindung geht aus von einer Handwerkzeugmaschine mit einer Steuervorrichtung umfassend eine Steuereinheit und eine Sensoreinheit zur Erzeugung eines Entfernungssignals.

Es wird vorgeschlagen, dass die Steuereinheit dazu vorgesehen ist, zumindest einen Betriebsparameter einer Werkzeugtrageeinheit in Abhängigkeit von dem Entfernungssignal zu steuern und in Abhängigkeit von dem Entfernungssignal Werkzeugdaten zu ermitteln und den Betriebsparameter an die Werkzeugdaten anzupassen. Hierdurch kann der Betriebsparameter an ein benutztes Werkzeug, einen Werkstoff oder an eine Bearbeitungsstrecke angepasst werden, um - insbesondere automatisch - ein sehr gutes Bearbeitungsergebnis zu erzielen, ohne dass der Bediener der Handwerkzeugmaschine über besondere Erfahrungen verfügen müsste. Die Steuerung kann z.B. durch eine Berechnung der Größe des Betriebsparameters in Abhängigkeit vom Entfernungssignal oder durch eine Auswahl der Größe aus einem ein- oder mehrdimensionalen Datenfeld erreicht werden. Die Handwerkzeugmaschine kann eine Säge, eine Schleifmaschine oder ein Winkelschleifer sein. Besonders vorteilhaft ist die Handwerkzeugmaschine eine Bohrmaschine, da die optimale Einstellung eines Bohrers bzgl. Drehgeschwindigkeit und beispielsweise Schlag für einen Laien besonders schwierig ist und eine Automatisierung hier besonders deutliche Vorteile im Arbeitsergebnis bringt. Die Bohrmaschine kann mit oder ohne Schlagwerk, als Bohrhammer, Akkubohrer oder als Akkuschrauber oder dergleichen ausgeführt sein. Denkbar sind auch eine Stichsäge, eine Säbelsäge, ein Winkelschleifer oder eine Fliesensäge, bei denen eine Eintauchtiefe in ein Werkstück einstellbar sein soll.

Die Sensoreinheit umfasst zweckmäßigerweise einen Entfernungssensor. Die Entfernung kann optisch, z.B. mittels Laserstrahlung und/oder Infrarotstrahlung, mittels Ultraschall oder mechanisch ermittelt werden. Vorteilhafterweise ist die Steuereinheit zur wiederholten, insbesondere kontinuierlichen Messung der Entfernung während eines Arbeitsgangs vorbereitet. Hierdurch kann der Betriebsparameter während eines Arbeitsgangs verändert bzw. angepasst werden. Der Betriebsparameter ist vorteilhafterweise ein Arbeitsparameter, bei dem die Werkzeugtrageeinheit in Bewegung verbleibt und insbesondere das von der Werkzeugtrageeinheit getragene Werkzeug zu einer Bearbeitung eines Werkstücks vorgesehen ist. Die Werkzeugtrageeinheit kann eine Spindel zur Aufnahme eines Bohrers, Meißels oder dergleichen sein oder eine Aufnahme für ein Sägeblatt, eine Schleifscheibe, eine Trennscheibe oder dergleichen.

In einer vorteilhaften Ausgestaltung der Erfindung ist der Betriebsparameter zumindest ein Parameter aus der Gruppe Laufgeschwindigkeit, Schlagstärke, Schlagfrequenz, Pendelhub, maximales Drehmoment und Laufrichtung. Ist der Betriebsparameter eine Laufgeschwindigkeit, so kann beispielsweise die Laufgeschwindigkeit eines Werkzeugs kurz vor Erreichen einer eingestellten Bearbeitungstiefe oder -strecke verringert oder auf null zurückgesetzt werden. Ebenfalls denkbar ist ein Auskuppeln des Werkzeugs, wobei ein Motor der Handwerkzeugmaschine weiterläuft und das Werkzeug beispielsweise zum Stillstand kommt. Ist die Betriebsgröße ein Pendelhub, so kann beispielsweise die Bearbeitungsgeschwindigkeit eines Sägeblatts im Werkstück an eine gewünschte Bearbeitungsgeschwindigkeit angepasst und ein ruhigeres oder zügigeres Arbeiten erreicht werden. Ist der Betriebsparameter eine Schlagstärke oder Schlagfrequenz, so kann die Schlagstärke oder die Schlagfrequenz - beispielsweise bei einem als ungenügend erkannten Bohrvorschub - erhöht werden. Ist die Betriebsgröße ein maximales Drehmoment, kann - insbesondere bei einem Schrauber - das Drehmoment vor oder bei Erreichen einer erwünschten Einschraubtiefe verringert werden, so dass einem Überschrauben einer Schraube in einem Werkstück entgegengewirkt wird. Vorteilhafterweise ist die Betriebsgröße eine Laufrichtung. Die Steuervorrichtung kann, insbesondere bei Verwendung einer bekannten Bitlänge, selbständig erkennen, ob ein Bediener die Schraube herein- oder herausdrehen möchte und die Laufrichtung entsprechend einstellen.

Vorteilhafterweise ist die Steuereinheit zur Ermittlung einer Relativgeschwindigkeit der Sensoreinheit zu einem Werkstück vorgesehen. Hierdurch kann die Betriebsgröße so angepasst werden, dass ein optimaler Arbeitsfortschritt erreichbar ist.

Bevorzugt ist die Steuereinheit zur Veränderung des Betriebsparameters unter Beibehaltung eines Arbeitsgangs an einem Werkstück in Abhängigkeit vom Entfernungssignal vorgesehen. Ein als ungenügend erkannter oder zu schneller Arbeitsfortschritt kann optimiert und das Bearbeitungsergebnis hierdurch verbessert werden, ohne dass der Arbeitsgang unterbrochen werden müsste.

Gemäß der Erfindung ist die Steuereinheit dazu vorgesehen, in Abhängigkeit von dem Entfernungssignal Werkzeugdaten zu ermitteln und den Betriebsparameter an die Werkzeugdaten anzupassen. Durch die Ermittlung der Entfernung, z.B. vom Entfernungssensor zum Werkstück, kann auf eine Werkzeuggröße, z.B. eine Bohrergröße oder eine Sägengröße, geschlossen werden und die Bewegung des Werkzeugs an die Werkzeuggröße angepasst werden. Die Ermittlung kann durch eine Berechnung oder eine Auswahl aus vorgegebenen Daten erfolgen.

In einer weiteren Ausführungsform ist die Steuereinheit dazu vorgesehen, in Abhängigkeit von dem Entfernungssignal Werkstoffdaten von einem das Entfernungssignal reflektierenden Werkstück zu ermitteln und den Betriebsparameter an die Werkstoffdaten anzupassen. So kann, z.B. bei Verwendung von elektromagnetischer Strahlung als Entfernungssignal, die Phase der reflektierten elektromagnetischen Strahlung ermittelt und daraus auf einen metallischen oder nichtmetallischen Werkstoff geschlossen werden. Durch eine entsprechende Anpassung des Betriebsparameters kann auf einfache Weise ein gutes Arbeitsergebnis erzielt werden.

Besonders preiswert ist die Handwerkzeugmaschine herstellbar, wenn die Sensoreinheit einen optischen Sensor aufweist, beispielsweise einen Infrarotsensor. Eine Entfernung zu einem Werkstück kann mittels Laufzeitmessung oder mit Hilfe von Triangulation ermittelt werden, indem ein Sender und ein Empfänger der Sensoreinheit in einem bekannten Abstand zueinander in der Sensoreinheit angeordnet sind.

Zweckmäßigerweise ist das Entfernungssignal ein Hochfrequenzsignal, insbesondere ein Radarsignal. Durch die hohe Frequenz kann ein Entfernungssensor leicht in beispielsweise eine Bohrmaschine integriert und klein ausgeführt werden. Hierfür weist das Entfernungssignal vorteilhafterweise eine Frequenz über 70 GHz auf, wodurch seine Antenne klein ausfallen kann. Zusätzlich kann ein Entfernungssensor innerhalb eines Maschinengehäuses eingebaut und somit unsichtbar gehalten und vor Verschmutzung geschützt werden. Weiterhin können eine Kalibrierung und Voreinstellung entfallen, so dass der Entfernungssensor leicht zu bedienen und störunanfällig ist. Die Handwerkzeugmaschine kann kompakt und unempfindlich gehalten werden, wenn der Entfernungssensor auf einem Radarchip integriert ist, der zu einer Hochfrequenzerzeugung, einem Hochfrequenzempfang und einer Rohsignalverarbeitung vorgesehen ist. Eine zusätzliche Weiterverarbeitung in ein Niederfrequenzsignal bereits auf dem Radarchip ist ebenfalls vorteilhaft.

Eine besonders sichere Bedienung der Handwerkzeugmaschine kann erreicht werden, wenn die Steuereinheit Sicherheitsdaten aufweist, die einen Abstand eines Objekts, insbesondere eines Bedieners, von einem Werkzeug betreffen und zur Steuerung des Betriebsparameters in Abhängigkeit von dem Entfernungssignal und den Sicherheitsdaten vorgesehen sind. So kann die Steuereinheit beispielsweise die Bewegung eines Werkzeugs abschalten, wenn ein Bediener dem Werkzeug, beispielsweise einer Kreissäge, zu nahe kommt. Durch eine zusätzliche Bremse kann hierdurch Unfällen entgegengewirkt werden. Der Betriebsparameter ist zweckmäßigerweise ein Bewegungsparameter der Werkzeugtrageeinheit.

Es wird außerdem vorgeschlagen, dass die Sensoreinheit mehrere Sensoren aufweist und die Steuereinheit zu einer Ermittlung einer Winkelstellung eines Werkzeugs zu einem Werkstück vorgesehen ist. Ein schräges Bohren kann beispielsweise durch ein Warnsignal angezeigt und dem Bediener ein gerades Bohren erleichtert werden.

Durch einen Entfernungsdatenspeicher und ein Mittel zum Zurücksetzen von Daten im Entfernungsdatenspeicher kann eine Arbeitsgangstrecke, beispielsweise eine Bohrtiefe, besonders einfach von einem Bediener überwacht werden. Das Zurücksetzen kann manuell oder automatisch erfolgen. Besonders vorteilhaft ist ein automatisches Zurücksetzen, beispielsweise zu Beginn eines Bearbeitungsvorgangs, wie einem Bohren, da davon ausgegangen werden kann, dass das Werkzeug, beispielsweise ein Bohrer, zu Beginn des Bearbeitungsvorgangs am Werkstück anliegt.

Eine einfache Bedienung der Handwerkzeugmaschine kann erreicht werden, wenn die Handwerkzeugmaschine eine Ausgabeeinheit umfasst, wobei die Steuereinheit dazu vorgesehen ist, einen Arbeitsparameter durch die Ausgabeeinheit anzuzeigen. Der Arbeitsparameter kann eine eingestellte oder erreichte Bohrtiefe oder ein eingestellter oder zurückgelegter Arbeitsweg sein. Vorteilhaft als Arbeitsparameter sind ferner Werkstückdaten, ein eingestellter oder gewünschter Arbeitsmodus, Werkzeugdaten und/oder zumindest ein Betriebsparameter. Eine Anzeige kann optisch erfolgen, z.B. alphanumerisch oder als Leuchtsignal, oder als akustisches Signal. Mit gleichem Vorteil umfasst die Handwerkzeugmaschine eine Bedieneinheit zur Eingabe eines Arbeitsparameters.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen:

- Fig. 1: eine Bohrmaschine in einer schematischen Dar- stellung von der Seite und von vorn,
- Fig. 2a-2d: Frontansichten von Bohrmaschinen mit ver- schiedenen Anordnungen von Entfernungssenso- ren,
- Fig. 3a-3c: drei Anzeigeeinrichtungen,
- Fig. 4: eine Bohrmaschine mit einem Dübel an einer Wand von der Seite und von hinten,
- Fig. 5: die Bohrmaschine aus Figur 4 direkt an der Wand,
- Fig. 6: eine weitere Bohrmaschine von der Seite und von hinten,
- Fig. 7: eine Stichsäge in schematischer Darstellung von der Seite und von oben,
- Fig. 8: eine stationär montierte Handkreissäge und
- Fig. 9: einen Akkuschrauber von der Seite und von hin- ten.

### Beschreibung der Ausführungsbeispiele

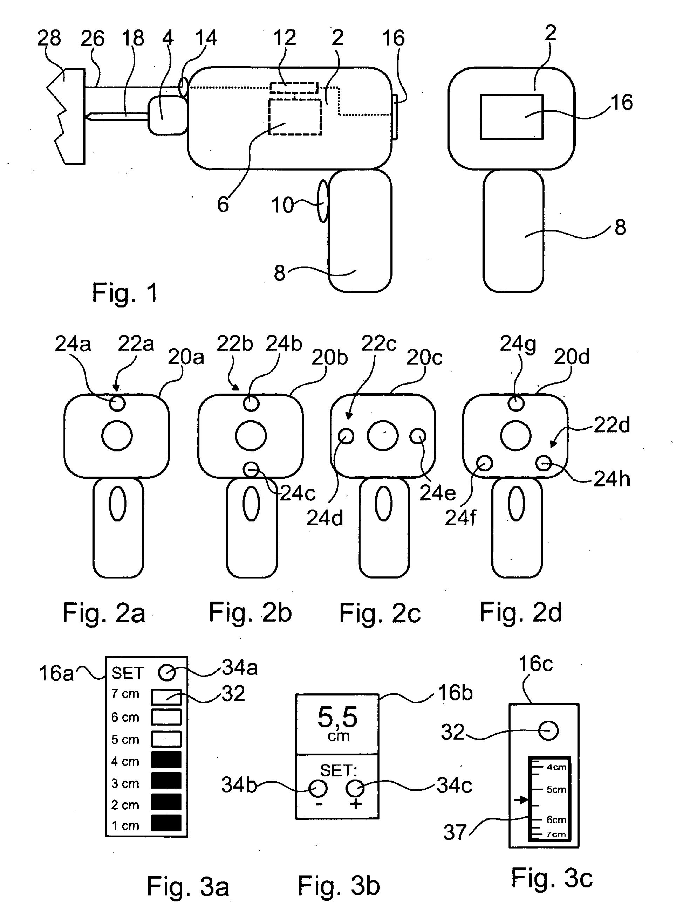

Figur 1 zeigt eine als Bohrmaschine 2 ausgeführte Handwerkzeugmaschine in einer schematischen Darstellung von der Seite und von hinten. Die Bohrmaschine 2 umfasst eine Werkzeugtrageeinheit in Form einer Spindel 4, die von einem Motor 6 antreibbar ist, einen Handgriff 8 mit einem Betätigungsknopf 10 und eine Steuereinheit 12 zur Steuerung des Motors 6, die mit einer Sensoreinheit 14 und einer als Anzeigemittel 16 ausgeführten Ausgabeeinheit mit einer Flüssigkristallanzeige verbunden ist. In der Spindel 4 ist ein Werkzeug 18 in Form eines Bohrers befestigt. Das in Figur 1 gezeigte Prinzip ist auf alle in den Figuren gezeigten Handwerkzeugmaschinen zumindest im Wesentlichen übertragbar.

In den Figuren 2a - 2d sind vier verschiedene, als Bohrmaschinen 20a - 20d ausgeführte Handwerkzeugmaschinen in einer schematischen Ansicht von vorn gezeigt. Die Bohrmaschinen 20a - 20d umfassen jeweils eine Sensoreinheit 22a - 22d mit jeweils einem oder mehreren Sensoren 24a - 24h. Die Bohrmaschine 20a umfasst lediglich einen Sensor 24a zur Messung einer Entfernung 26 zwischen dem Sensor 24a und einem Werkstück 28. Durch die Verwendung von zwei Sensoren 24b, 24c bzw. 24d, 24e wie in der Bohrmaschine 20b in Figur 2b bzw. 20c in Figur 2c kann ein Verkippen der Bohrmaschine 20b, 20c in einer oder quer zu einer Griffrichtung relativ zum Werkstück 28 durch einen unterschiedlichen Abstand der Sensoren 24b, 24c bzw. 24d, 24e vom Werkstück 28 erkannt werden. Bei drei Sensoren 24f - 24h wie in Figur 2d oder mehr Sensoren kann ein Verkippen der Bohrmaschine 20d längs und quer zur Griffrichtung erkannt werden und einem Bediener ein exakt senkrechtes Bohren in das Werkstück 28 erleichtert werden.

Die Figuren 3a und 3b zeigen zwei verschiedene Anzeigemittel 16a, 16b zur Verwendung in einer Anordnung, wie beispielsweise in Figur 1 gezeigt ist. Das Anzeigemittel 16a zeigt eine Entfernung 26 von beispielsweise der Sensoreinheit 14 zum Werkstück 28 oder eine Entfernungsänderung anhand von sieben LEDs 32 an, die je nach Entfernung 26 bzw. Entfernungsänderung leuchten oder nicht. Durch eine Bedieneinheit, beispielsweise in Form eines Knopfs 34a, kann das Anzeigemittel 16a auf null zurückgesetzt werden, beispielsweise wenn eine Spitze des Werkzeugs 18 am Werkstück 28 anliegt. Wird nun in einem Arbeitsgang das Werkzeug 18 in das Werkstück 28 eingeführt, so wird die von der Position des Zurücksetzens des Anzeigemittels 16a zurückgelegte Strecke der Sensoreinheit 14 relativ zum Werkstück 28 in Schritten von 1 cm angezeigt.

Beim Anzeigemittel 16b aus Figur 3b ist die Entfernungsanzeige numerisch in Schritten von 0,1 cm. Zum Zurücksetzen der Entfernungsanzeige, im Folgenden auch "Nullen" genannt, umfasst das Anzeigemittel 16b zwei Knöpfe 34b,c. Bei einem gleichzeitigen Drücken der beiden Knöpfe 34b,c wird die Entfernungsanzeige genullt. Zum Einstellen einer gewünschten Bohrtiefe werden die Knöpfe 34b,c getrennt verwendet, bis die gewünschte Bohrtiefe angezeigt wird. Anschließend kann das Werkzeug 18 an das Werkstück 28 angelegt und der Betätigungsknopf 10 gerückt werden, so dass der Motor 6 anläuft und das Werkzeug 18 bewegt. Durch das Drücken des Betätigungsknopfs 10 wird das Anzeigemittel 16b automatisch von der Steuereinheit 12 genullt und die vom Werkzeug 18 im Werkstück 28 zurückgelegte Arbeitsstrecke angezeigt. Erreicht die Arbeitsstrecke den voreingestellten Wert, wird der Motor 6 von der Steuereinheit 12 automatisch abgeschaltet. Alternativ ist ein Auskuppeln der Spindel 4 in einen Leerlauf oder ein akustisches Signal oder eine optische Anzeige auf dem Anzeigemittel 16b möglich, beispielsweise, indem die angezeigte Zahl anfängt zu blinken.

Das Anzeigemittel 16c aus Figur 3c weist einen Drehregler 37 und eine LED 32 auf. Auf den Drehregler 37 sind Entfernungen 26 aufgedruckt und können einfach eingestellt werden. Bei Erreichen der Entfernung 26 leuchtet die LED 32 oder der Motor 6 wird abgestellt.

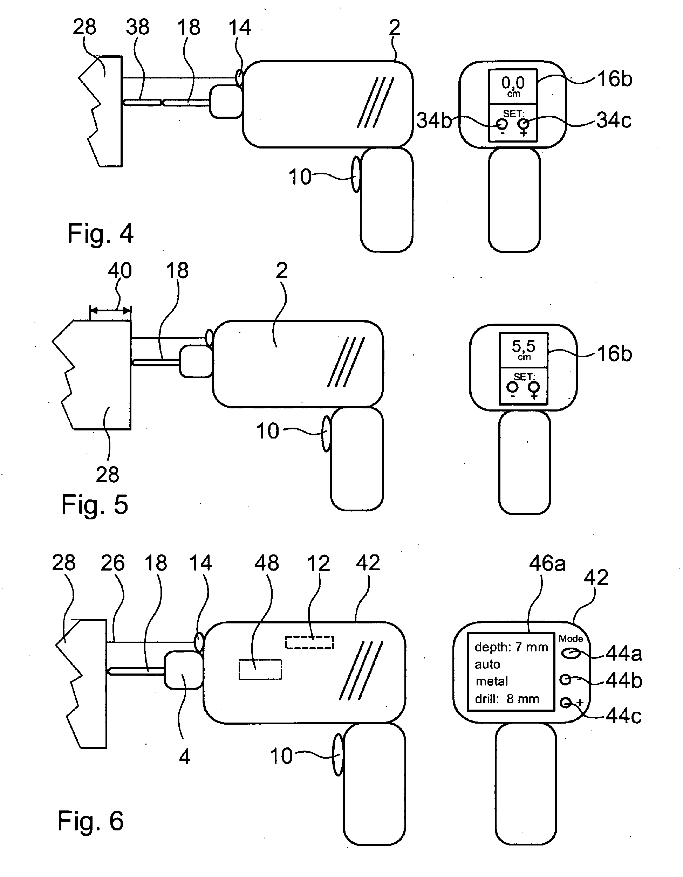

Ein alternatives Verfahren zur Voreinstellung einer Bohrtiefe ist im Folgenden anhand der Figuren 4 und 5 erläutert. An das Werkstück 28, beispielsweise eine Wand, wird ein Dübel 38, wie in Figur 4 gezeigt, angelegt. Nun wird das Werkzeug 18 an den Dübel 38 angelegt und die beiden Knöpfe 34b, 34c werden gleichzeitig gedrückt, wodurch das Anzeigemittel 16b genullt wird, wie in Figur 4 gezeigt ist. Die Steuereinheit 12 umfasst einen Entfernungsdatenspeicher, wobei das gleichzeitige Drücken der Knöpfe 34b, 34c die Daten im Entfernungsdatenspeicher zurücksetzt. Anschließend wird der Dübel 38 entfernt und das Werkzeug 18, wie in Figur 5 gezeigt, direkt an das Werkstück 28 angelegt. Die Sensoreinheit 14 wird hierbei um die Länge des Dübels 38, beispielsweise um 5,5 cm, näher an das Werkstück 28 herangeführt. Diese Entfernungsänderung ist auf dem Anzeigemittel 16b angezeigt. Nun kann der Betätigungsknopf 10 gedrückt werden, wodurch das Anzeigemittel 16b genullt und das Werkzeug 18 in das Werkstück 28 eingeführt wird. Bei Erreichen des voreingestellten Werts von beispielsweise 5,5 cm entspricht eine Bohrtiefe 40 genau der Länge des Dübels 38. Durch eine automatische Reaktion der Steuereinheit 12 wird der Arbeitsvorgang unterbrochen oder das Erreichen des Arbeitsziels akustisch oder optisch angezeigt.

Figur 6 zeigt eine weitere als Bohrmaschine 42 ausgeführte Handwerkzeugmaschine. Im Wesentlichen gleich bleibende Bauteile sind grundsätzlich mit den gleichen Bezugszeichen beziffert. Ferner kann bzgl. gleich bleibender Merkmale und Funktionen auf die Beschreibung zu den Ausführungsbeispielen
in den Figuren 1 - 5 verwiesen werden. Die nachfolgende Beschreibung beschränkt sich im Wesentlichen auf die Unterschiede zu den Ausführungsbeispielen aus den Figuren 1 - 5. Die Bohrmaschine 42 kann in mehreren Modi betrieben werden, die mit Hilfe eines Einstellmittels in Form eines Knopfs 44a auswählbar sind. Der gewählte Modus wird auf einem Anzeigemittel 46a angezeigt, in Figur 6 wird ein Automatikmodus durch die Anzeige "auto" angezeigt. Durch Knöpfe 44b, 44c kann eine gewünschte Bohrtiefe eingestellt werden, die ebenfalls auf dem Anzeigemittel 46a angezeigt wird. Alternativ ist das zu den Figuren 4 und 5 beschriebene Auswahlverfahren zur Auswahl einer Bohrtiefe möglich. Nun kann - nach Befestigen des Werkzeugs 18 in der Spindel 4 - das Werkzeug 18 an das Werkstück 28 angelegt und der Betätigungsknopf 10 gedrückt werden. Durch die Sensoreinheit 14 in Verbindung mit der Steuereinheit 12 wird die Entfernung 26 der Sensoreinheit 14 vom Werkstück 28 gemessen. Die Sensoreinheit 14 umfasst hierzu einen Hochfrequenzsender, beispielsweise einen Radarsender. Der Radarsender ist Teil eines kompakten Bauelements in Form eines Radarchips, auf dem Auswerteelektronik integriert ist. Aus der Entfernung 26 wird von der Steuereinheit 12 automatisch auf die Art des Werkzeugs 18, nämlich dessen Dicke, geschlossen. Der Rückschluss erfolgt in der Steuereinheit 12 anhand eines Datenfelds, in dem Bohrerdicken Bohrerlängen zugeordnet werden. Die Bohrerlänge lässt sich aus der Entfernung 26 und einer bekannten Position eines Anschlags für das Werkzeug 18 innerhalb der Spindel 4 ermitteln. Die Bohrerdicke wird nun ebenfalls auf dem Anzeigemittel 46a angezeigt, im Beispiel aus Figur 6 sind es 8 mm. Alternativ kann die Bohrerdicke mittels eines zusätzlichen, z.B. im Bohrfutter angeordneten Sensors ermittelt werden. Das vom Werkstück 28 reflektierte Entfernungssignal wird von der Sensoreinheit 14 empfangen und auf seine Phase im Verhältnis zur Entfernung 26 untersucht. Aus diesem Verhältnis ermittelt die Steuereinheit einen Phasensprung des Entfernungssignals im Werkstück 28 und schließt daraus auf das Material des Werkstücks 28, beispielsweise Metall. Das Ermittlungsergebnis wird ebenfalls auf dem Anzeigemittel 46a angezeigt.

Nun wird von der Steuereinheit 12 ein optimaler Bohrmodus berechnet, wobei in die Berechnung das Material des Werkstücks 28 und die Bohrerdicke einfließen. Als Ergebnis wird eine optimale Drehzahl als Betriebsparameter vorgegeben, mit der die Spindel 4 und damit das Werkzeug 18 durch den Motor 6 angetrieben wird. Außerdem wird als weiterer Betriebsparameter ein maximales Drehmoment angegeben, oberhalb dessen eine Sicherheitskupplung 48 ausrastet und die Kraftübertragung vom Motor 6 zur Spindel 4 unterbricht. Auf diese Weise kann ein Abbrechen des Werkzeugs 18 verhindert werden. Die Betriebsparameter können ebenfalls auf dem Anzeigemittel 46a angezeigt werden, beispielsweise als zusätzliche Information oder als gesondert abrufbare Information, z.B. durch eine Betätigung des Knopfs 44a. Der Bohrfortschritt des Werkzeugs 18 im Werkstück 28 wird durch eine rückläufige Anzeige der Bohrtiefe auf dem Anzeigemittel 46a angezeigt, so dass ein Bediener stets weiß, welche Strecke ihm zu bohren verbleibt. Bei Erreichen der gewünschten Bohrtiefe wird das Werkzeug 18 durch die Sicherheitskupplung 48 ausgekuppelt und der Motor 6 von der Steuereinheit 12 langsam gestoppt.

Wird als Werkstück 28 ein hartes Material, beispielsweise Stein, von der Steuereinheit 12 aus dem Entfernungssignal erkannt, so wird als zusätzlicher Betriebsparameter eine Schlagstärke und/oder Schlagfrequenz von der Steuereinheit 12 an das Werkzeug 18 angepasst. Zusätzlich wird die Geschwindigkeit des Bohrfortschritts, also wie schnell der Bohrer in das Werkstück 28 eindringt, von der Steuereinheit erfasst und die Schlagstärke ggf. verändert, bei zu langsamem Bohrfortschritt erhöht und bei sehr schnellem Bohrfortschritt, beispielsweise in Ziegel, gesenkt.

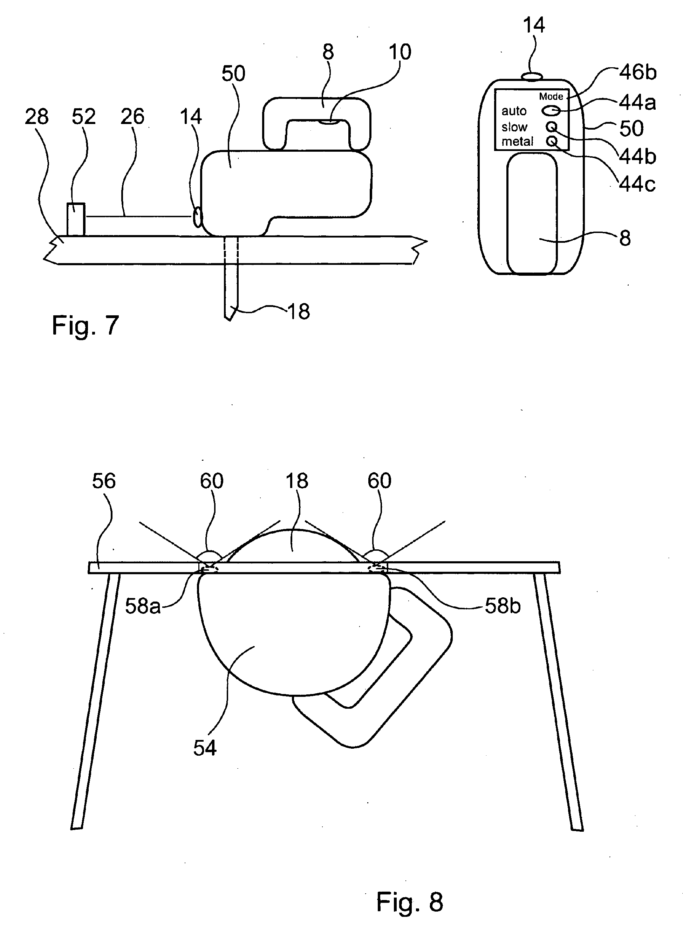

Figur 7 zeigt eine Stichsäge 50 in einer perspektivischen Darstellung von der Seite und von oben. Die Stichsäge 50 umfasst ein als Stichsägeblatt ausgeführtes Werkzeug 18, einen Handgriff 8, eine Sensoreinheit 14 und damit verbundene Steuerelemente, wie zu den vorhergehenden Figuren beschrieben. Auf einem Anzeigemittel 46b der Stichsäge 50 kann ein Betriebsmodus durch den Knopf 44a eingestellt werden, in Figur 7 ist es ein Automatikmodus. Zusätzlich kann mit Hilfe des Knopfs 44b eine gewünschte Arbeitsgeschwindigkeit, langsam, mittel oder schnell, gewählt werden. Auch diese Geschwindigkeit wird auf dem Anzeigemittel 46b angezeigt. Mit Hilfe des Knopfs 44c kann das Material des zu bearbeitenden Werkstücks 28 ausgewählt werden. Alternativ wird das Material aus dem Entfernungssignal automatisch ermittelt. Nach einem Drücken des Betätigungsknopfs 10.wird die Entfernung 26 von der Sensoreinheit 14 zu einem Messelement 52, das ein Bediener mit dem Werkstück 28 verbunden hat, permanent gemessen und daraus eine Arbeitsgeschwindigkeit des Werkzeugs 18 im Werkstück 28 ermittelt. Möglich ist auch die Ausführung der Sensoreinheit 14 als Dopplerradar zur direkten Bestimmung des Arbeitsfortschritts des Werkzeugs 18 im Werkstück 28. Aus dem Arbeitsfortschritt, dem Werkstückmaterial und dem gewünschten Arbeitsfortschritt wird von der Steuereinheit 12 ein optimaler Pendelhub ermittelt und das Werkzeug 18 dementsprechend gesteuert, wobei hierdurch ein gutes Arbeitsergebnis, beispielsweise ein sauberer Schnitt im Werkstück 28, erreicht werden kann.

Figur 8 zeigt eine als Handkreissäge 54 ausgeführte Handwerkzeugmaschine, die an einem Werktisch 56 befestigt ist und als Tischkreissäge verwendet wird. Die Handkreissäge 54 umfasst zwei Sensoren 58a, 58b mit jeweils einem in Figur 8 dargestellten Überwachungsbereich 60. Wird irgendein Gegenstand innerhalb des Überwachungsbereichs 60 mit einer Geschwindigkeit bewegt, die einen in der Steuereinheit 12 der Handkreissäge 54 gespeicherten Sicherheitswert übersteigt, so wird das als Kreissägeblatt ausgeführte Werkzeug 18 mit Hilfe einer Bremse unverzüglich gestoppt. Wird ein Gegenstand mit einer Geschwindigkeit, die einen zweiten Sicherheitswert der Steuereinheit 12 überschreitet, vom Werkzeug 18 entfernt, so wird das Werkzeug 18 ebenfalls sofort gestoppt. Der zweite Sicherheitswert ist hierbei wesentlich größer als der erste Sicherheitswert, so dass das Kreissägeblatt bei einem zügigen Wegführen eines Werkstücks weiterläuft, jedoch beispielsweise bei einem Zurückzucken einer Hand eines Bedieners abrupt stoppt.

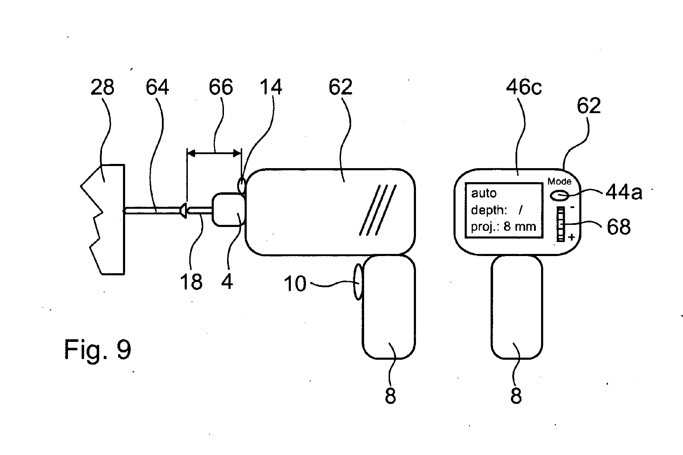

Figur 9 zeigt einen Akkuschrauber 62 in einer schematischen Darstellung von der Seite und von hinten. In der Spindel 4 des Akkuschraubers 62 ist ein Werkzeug 18 in Form eines Schraubbits befestigt. Zum Einschrauben einer Schraube 64 in das Werkstück 28 kann zunächst mit Hilfe des Knopfs 44a eines Anzeigemittels 46c ein Betriebsmodus des Akkuschraubers 62 gewählt werden, beispielsweise der Automatikmodus, wie in Figur 9 dargestellt. Mit Hilfe eines Drehrads 68 kann nun festgelegt werden, wie tief die Schraube 64 in das Werkstück 28 eingeschraubt werden soll. Die angezeigte Tiefe wird auf dem Anzeigemittel 46c angezeigt, und die Schraube 64 kann - analog wie zu Figur 6 beschrieben - in der gewünschten Einschraubtiefe in das Werkstück 28 eingeschraubt werden. In einem anderen Betriebsmodus wird die Strecke eingestellt, die die Schraube 64 aus dem Werkstück 28 herausragen soll, in Figur 9 sind 8 mm angezeigt. Hierzu wird das Werkzeug 18 beispielsweise in eine mit einem Schraubenschlitz versehene Lehre eingesteckt und der Betätigungsknopf 10 kurz betätigt. Die Steuereinheit berechnet nun in Verbindung mit der Sensoreinheit 14 die Entfernung 26 zur Lehre, die einem Abstand 66 zum Kopf der Schraube 64 entspricht. Nun kann die Schraube 64 in das Werkstück 28 eingeschraubt werden, wobei die Entfernung 26 zwischen Sensoreinheit 14 und Werkstück 28 permanent überwacht wird. Erreicht diese Entfernung 26 den Abstand 66 zuzüglich der eingestellten Strecke von 8 mm, so wird die Spindel 4 von der Steuereinheit 12 automatisch ausgekoppelt und der Motor 6 zum Stehen gebracht.

Sollte die Schraube 64 bereits in dem Werkstück 28 eingeschraubt sein, so erkennt die Steuereinheit 12 anhand der Entfernung 26 das geringe Hervorstehen der Schraube 64 aus dem Werkstück 28 und bestimmt die Drehrichtung des Schraubbits automatisch so, dass die Schraube 64 bei einem Drücken des Betätigungsknopfs 10 herausgeschraubt wird. Auf diese Weise wird die Drehrichtung des Schraubbits von der Steuereinheit 12 abhängig von dem Entfernungssignal automatisch eingestellt.

## Patentansprüche

1. Handewerzeugmaschine mit einer Steuervorrichtung umfassend eine Steuereinheit (12) und eine Sensoreinheit (14) zur Erzeugung eines Entfernungssignals, wobei die Steuereinheit (12) dazu vorgesehen ist, zumindest einen Betriebsparameter einer Werkzeugtrageeinheit in Abhängigkeit von dem Entfernungssighal zu steuern, **dadurch gekennzeichnet, dass** die Steuereinheit (12) dazu vorgesehen ist in Abhängigkeit von dem Entfernungssignal Werkzeugdaten zu ermitteln und den Betriebsparameter an die Werkzeugdaten anzupassen

2. Handwerkzeugmaschine nach Anspruch 1, **dadurch gekennzeichnet, dass** der Betriebsparameter zumindest ein Parameter aus der Gruppe Laufgesdiwindigkeit, Schlagstärke, Schlagfrequenz, Pendelhub, maximales Drehmoment und Laufrichtung ist.

3. Handwerkzeugmäschine nach Anspruch 1 oder 2, **dadurch gekennzeichnet, dass** die Steuereinheit (12) zur Veränderung des Betriebsparameters unter Beibehaltung eines Arbeitsgangs an einem Werkstück (28) in Abhängigkeit vom Entfernungssignal vorgesehen ist.

4. Handwerkzeugmaschine nach einem der vorhergehenden Ansprüche, **dadurch gekennzeichnet, dass** die Steuereinheit (12) dazu vorgesehen ist, in Abhängigkeit von dem Entfernungssignal Werkstoffdaten von einem das Entfernungssignal reflektiereden Werkstück (28) zu ermitteln und den Betriebsparameter an die Werkstoffdaten anzupassen.

5. Handwerkzeugmaschine nach einem der vorhergehenden Ansprüche, **dadurch gekennzeichnet, dass** das Entfernungssignal ein Hochfrequenzsignal, insbesondere ein Radarsignal, ist.

6. Handwerkzeugmaschine nach einem der vorhergehenden Ansprüche, **dadurch gekennzeichnet, dass** die Steuereinhelt (12) Sicherheitsdaten aufweist, die einen Abstand eines Objekts, insbesondere eines Bedieners, von einem Werkzeug (18) betreffen und zur Steuerung des Betriebsparameters in Abhängigkeit von dem Entfernungssignal und den Sicherheitsdaten vorgesehen sind.

7. Handwerkzeugmaschine nach einem der vorhergehenden Ansprüche, **dadurch gekennzeichnet, dass** die Sensoreinheit (14) mehrere Sensoren (24a-h) aufweist und die Steuereinheit (12) zu einer Ermittlung einer Wickelstellung eines Werkzeugs (18) zu einem Werkstück (28) vorgesehen ist

8. Handwerkzeugmaschine nach einem der vorhergehenden Ansprüche, **gekennzeichnet durch** einen Entfernungsdatenspeicher und ein Mittel zum Zurücksetzen von Daten im Entferungsdatenspeicher.

9. Handwerkzeugmaschine nach einem der vorhergehenden Ansprüche, **gekennzeichnet durch** eine Ausgabeeinheit, wobei die Steuereinheit dazu vorgesehen ist, einen Arbeitspararmeter **durch** die Ausgabeeinheit anzuzeigen.

10. Handwerkzeugmaschine nach einem der vorhergehenden Ansprüche, **gekennzeichnet durch** eine Bedieneinheit zur Eingabe eines Arbeitsparameters.

## Claims

1. Portable power tool having a control device comprising a control unit (12) and a sensor unit (14) for generating a distance signal, the control unit (12) being provided for controlling at least one operating parameter of a tool-carrying unit as a function of the distance signal, **characterized in that** the control unit (12) is provided for determining tool data as a function of the distance signal and for adapting the operating parameter to the tool data.

2. Portable power tool according to Claim 1, **characterized in that** the operating parameter is at least one parameter from the group comprising operating speed, impact intensity, impact frequency, pendulum stroke, maximum torque and operating direction.

3. Portable power tool according to Claim 1 or 2, **characterized in that** the control unit (12) is provided for varying the operating parameter as a function of the distance signal while continuing with an operation on a workpiece (28).

4. Portable power tool according to one of the preceding claims, **characterized in that** the control unit (12) is provided for determining, as a function of the distance signal, material data of a workpiece (28) reflecting the distance signal and for adapting the operating parameter to the material data.

5. Portable power tool according to one of the preceding claims, **characterized in that** the distance signal is a high-frequency signal, in particular a radar signal.

6. Portable power tool according to one of the preceding claims, **characterized in that** the control unit (12) has safety data which concern the distance of an object, in particular an operator, from a tool (18) and are provided for controlling the operating parameter as a function of the distance signal and the safety data.

7. Portable power tool according to one of the preceding claims, **characterized in that** the sensor unit (14) has a plurality of sensors (24a-h) and the control unit (12) is provided for determining an angular position of a tool (18) relative to a workpiece (28).

8. Portable power tool according to one of the preceding claims, **characterized by** a distance data memory and a means for resetting data in the distance data memory.

9. Portable power tool according to one of the preceding claims, **characterized by** an output unit, the control unit being provided for indicating a working parameter by means of the output unit.

10. Portable power tool according to one of the preceding claims, **characterized by** an operating unit for inputting a working parameter.

## Revendications

1. Machine-outil à main comprenant un dispositif de commande comprenant une unité de commande (12) et une unité de capteur (14), pour produire un signal d'éloignement, l'unité de commande (12) étant prévue pour commander au moins un paramètre de fonctionnement d'une unité porte-outil en fonction du signal d'éloignement, **caractérisée en ce que** l'unité de commande (12) est prévue pour déterminer des données de matériau en fonction du signal d'éloignement et pour adapter le paramètre de fonctionnement aux données de matériau.

2. Machine-outil à main selon la revendication 1, **caractérisée en ce que** le paramètre de fonctionnement est au moins un paramètre parmi le groupe constitué par la vitesse d'avance, la force d'impact, la fréquence d'impact, la course pendulaire, le couple maximal et la direction d'avance.

3. Machine-outil à main selon la revendication 1 ou 2, **caractérisée en ce que** l'unité de commande (12) est prévue pour modifier le paramètre de fonctionnement en conservant une passe de travail sur une pièce (28), en fonction du signal d'éloignement.

4. Machine-outil à main selon l'une quelconque des revendications précédentes, **caractérisée en ce que** l'unité de commande (12) est prévue pour déterminer, en fonction du signal d'éloignement, des données de matériau d'une pièce (28) réfléchissant le signal d'éloignement, et pour adapter le paramètre de fonctionnement aux données de matériau.

5. Machine-outil à main selon l'une quelconque des revendications précédentes, **caractérisée en ce que** le signal d'éloignement est un signal haute fréquence, notamment un signal radar.

6. Machine-outil à main selon l'une quelconque des revendications précédentes, **caractérisée en ce que** l'unité de commande (12) présente des données de sécurité, qui concernent une distance d'un objet, notamment d'un opérateur, à un outil (18), et qui sont prévues pour commander le paramètre de fonctionnement en fonction du signal d'éloignement et des données de sécurité.

7. Machine-outil à main selon l'une quelconque des revendications précédentes, **caractérisée en ce que** l'unité de capteur (14) présente plusieurs capteurs (24a-h) et l'unité de commande (12) est prévue pour déterminer une position angulaire d'un outil (18) par rapport à une pièce (28).

8. Machine-outil à main selon l'une quelconque des revendications précédentes, **caractérisée par** une mémoire de données d'éloignement et un moyen pour remettre à zéro des données dans la mémoire de données d'éloignement.

9. Machine-outil à main selon l'une quelconque des revendications précédentes, **caractérisée par** une unité de sortie, l'unité de commande étant prévue pour indiquer un paramètre de travail par le biais de l'unité de sortie.

10. Machine-outil à main selon l'une quelconque des revendications précédentes, **caractérisée par** une unité de contrôle pour entrer un paramètre de travail.
